# EUROPÄISCHE PATENTSCHRIFT

(11) **EP 4 704 073 B1**
(45) Veröffentlichungstag und Bekanntmachung des Hinweises auf die Patenterteilung: **03.06.2026**
(21) Anmeldenummer: 24197552.3
(22) Anmeldetag: 30.08.2024
(51) Int. Cl.: G10H 1/00, G06F 3/01

(54) **VERFAHREN UND VORRICHTUNG ZUR WANDLUNG VON TANZBEWEGUNGEN IN MUSIK UND LICHT**
METHOD AND DEVICE FOR CONVERTING DANCE MOVEMENT INTO MUSIC AND LIGHT
PROCÉDÉ ET DISPOSITIF POUR CONVERTIR DES MOUVEMENTS DE DANSE LA MUSIQUE ET LA LUMIÈRE

(43) Veröffentlichungstag der Anmeldung: 04.03.2026
(73) Patentinhaber: MSK Gesellschaft für Automatisierung mbH, 22869 Schenefeld (DE)
(72) Erfinder: Bernd, Schuster, 22763 Hamburg (DE)
(74) Vertreter: Groth, Wieland

(56) Entgegenhaltungen:
- KR-A- 20020 032 041
- US-B2- 10 234 956
- US-B2- 11 393 437
- US-B2- 6 897 779

## Beschreibung

Die Erfindung betrifft ein Verfahren zur Wandlung von Körperbewegungen in akustische und/oder optische Signale. Die Erfindung betrifft auch eine Vorrichtung zur Umsetzung von Körperbewegungen einer Person in akustische und/oder optische Signale.

Im Stand der Technik sind eine ganze Reihe von Verfahren als auch Vorrichtungen bekannt, mit denen Bewegungen einer Person durch Sensoren erfasst werden und in Töne und/oder Lichteffekte umgewandelt werden. Aus der US 10234956 B2 ist ein Verfahren und eine Vorrichtung zur Erzeugung (Komponieren, Abspielen, Hinzufügen von Musikeffekten) von Musik auf der Grundlage von Bewegungen bekannt. Mit Hilfe der Sensoren werden zunächst "Trigger-Gesten" erkannt, wodurch auf einem Empfangsgerät ein Programm (App) gestartet, ein virtuelles Musikinstrument selektiert, oder die Ausgabe von Audio- oder Lichtsignalen ausgelöst wird. Mit Hilfe der Bewegungssensordaten kann dann z.B. die Lautstärke, Tondauer, etc. des Audiosignals gesteuert werden.

Aus der CN 106504732 A ist ein System bekannt, bei dem der Tänzer am rechten und linken Handgelenk sowie an den Knöcheln und am Kopf Bewegungssensoren aufweist. An der Hüfte ist ein Datenverarbeitungsmodul angeordnet, das mit einem Soundmodul in kabelloser Verbindung steht. Das System ermöglicht nur eine unzureichende Erfassung der Bewegung des Tänzers.

In der KR 20020032041 A ist ein Sensor offenbart, wobei Einflüsse anderer Sensoren auf den einen Sensor durch einen Filter herausgefiltert werden.

Aus der WO 2009/127462 A1 ist bekannt, Bewegungen des Menschen durch Bewegungssensoren zu erfassen und in ein MIDI-Protokoll umzuwandeln. Hier wird jedoch das MIDI-Instrument selber über ein längliches Sensorfeld gespielt, es wird also nicht eine Tanzbewegung des Menschen erfasst.

Aus der US 2008/0250914 A1 ist ein System bekannt, bei dem Signale, die von einem oder mehreren Sensoren erzeugt werden, detektiert werden und in hörbare und sichtbare Ausdrücke umgewandelt werden. Dabei werden einfache Bewegungssensordaten erfasst und direkt in MIDI-Daten umgewandelt.

Aus der US 5,290,964 A ist ein musikalischer Tonerzeugungsapparat bekannt, bei dem eine Vielzahl von Sensoren am Körper des Spielers angeordnet ist. Die Bewegungssensordaten werden direkt in Musikdaten umgewandelt.

Aus der US 2019/0355335 A1 ist eine Vorrichtung bekannt, die ein Bewegungssignal in ein digitales Audiosignal umwandelt. Die Sensoren können als Gyroskope, Beschleunigungsmesser oder Magnetfeldmesser ausgebildet sein. Die Bewegungssignale können in Signale des MIDI-Protokolls umgewandelt und als Audiosignale ausgegeben werden.

Darüber hinaus sind Vorrichtungen zur Umsetzung von Tanzbewegungen in akustische/optische Signale aus der DE 36 430 18 A1, der US 2017/0177091 A1 und der CN 102739844 A bekannt.

Nachteilig an den bekannten Systemen ist durchwegs, dass MIDI-Daten, mit denen ein Tonerzeugungsgerät wie ein Synthesizer angesteuert werden, direkt durch die Bewegungssensoren erzeugt werden. Die Tanzbewegung der Person insgesamt wird damit unzureichend erfasst.

Es ist in einem ersten Aspekt Aufgabe der Erfindung, ein Verfahren zur Wandlung von Körperbewegungen einer Person in akustische und/oder optische Signale zur Verfügung zu stellen, das eine umfassendere Erfassung der Körperbewegung ermöglicht und eine Wandlung der Körperbewegung in akustische und/oder optische Signale ermöglicht.

Es ist in einem zweiten Aspekt die Aufgabe der Erfindung, eine Vorrichtung zur umfassenderen Erfassung von Körperbewegungen und Umsetzung von Körperbewegungen einer Person in akustische und/oder optische Signale zur Verfügung zu stellen.

Die Aufgabe wird in ihrem ersten Aspekt durch ein eingangs genanntes Verfahren mit den Merkmalen des Anspruchs 1 erfüllt.

Das eingangs genannte Verfahren zeichnet sich dadurch aus, dass eine Mehrzahl an Bewegungssensoren an Extremitäten der Person relativ positionsfest zur Person angeordnet wird, in einer ersten Stufe Bewegungen der Person durch die Bewegungssensoren gemessen werden und in Bewegungssensordaten umgewandelt werden und die Bewegungssensordaten in MIDI- Daten erster Stufe umgewandelt werden. In der ersten Stufe werden auch die Bewegungssensordaten als weitergeleitete Bewegungssensordaten an eine zweite Stufe weitergeleitet. Bei den an die zweite Stufe weitergeleiteten Bewegungssensordaten kann es sich um die der ersten Stufe zugeführten Bewegungssensordaten handeln. Vorzugsweise findet eine Bearbeitung der Bewegungssensordaten, beispielsweise durch Glättung, Synchronisation, d.h. die Zusammenfassung von zeitgleich entstehenden Signalen der Bewegungssensoren einer Extremität zu Frames, statt. Die weitergeleiteten Bewegungssensordaten können günstigerweise wie die Bewegungssensordaten den einzelnen Bewegungssensoren eindeutig_zugeordnet werden. Es ist auch denkbar, dass keine Bearbeitung der Sensordaten stattfindet, sondern lediglich eine unveränderte Weiterleitung in möglicherweise geänderter Zusammenstellung.

Das Verfahren ist vorzugsweise digital. Die Bewegung der Person wird durch die Bewegungssensoren gemessen, die Bewegungssensoren wandeln die Messwerte in elektrische Signale und dann in digitale Bewegungssensordaten um.

Der Begriff der Bewegung ist hier weit zu verstehen, er umfasst Stellung, Ausdehnung, Geschwindigkeit und Positionierung.

Unter relativ positionsfest wird hier verstanden, dass der Bewegungssensor an der Position, an der er zu Beginn des Betriebs des Verfahrens bzw. der Vorrichtung an dem Körper der Person angeordnet wurde, während des Betriebs verbleibt, also nicht verrutscht.

In einer zweiten Stufe des Verfahrens werden die einzelnen Extremitäten der Person zugeordneten Bewegungssensoren jeweils als Extremitätensensorgruppe zusammengefasst und aus den Bewegungssensordaten der Extremitätensensorgruppe werden Bewegungssensordaten der Extremität berechnet, die in Extremitätensensorgruppendaten umgewandelt werden. Die Bewegungssensordaten werden zu Extremitätensensorgruppendaten aggregiert. Die Extremitätensensorgruppendaten können neben der Position einzelner Extremitäten auch deren Geschwindigkeit, Winkelstellung innerhalb der Extremität und Weiteres umfassen. Die Extremitätensensorgruppendaten werden in MIDI-Daten zweiter Stufe umgewandelt und die MIDI-Daten erster Stufe und die MIDI-Daten zweiter Stufe werden an eine Ton- und/oder Lichterzeugungseinheit weitergeleitet. Bei einer Extremität handelt es sich insbesondere um den rechten Arm, den linken Arm, das rechte Bein und das linke Bein der Person.

Das erfindungsgemäße Verfahren macht zum einen von der Idee Gebrauch, eine Mehrzahl an Bewegungssensoren an Extremitäten der Person anzuordnen und durch die Vielzahl an Bewegungssensoren die Körperbewegung, insbesondere Tanzbewegung, der Person umfassender zu erfassen.

Günstigerweise werden zur Berechnung der Extremitätensensorgruppendaten auch Längendaten der Extremitäten ermittelt und aus den Bewegungssensordaten der Extremitätensensorgruppe und den Längendaten werden die Bewegungssensordaten der Extremität berechnet. Bei den Längendaten handelt es sich vorzugsweise um die Länge des rechten und linken Oberarmes, des rechten und linken Unterarmes, des rechten und linken Oberschenkels sowie des rechten und linken Unterschenkels. Es sind aber auch andere Längendaten denkbar, wie die Kopflänge, Fuß- und/oder Handlänge, in Abhängigkeit davon, ob an den jeweiligen Körperteilen Bewegungssensoren angeordnet sind.

Die Extremitätensensorgruppendaten beschreiben vorzugsweise die Stellung, Ausdehnung, Geschwindigkeit, Winkelstellung und Positionierung einer einzelnen Extremität in Bezug auf einen Referenzpunkt. Der Referenzpunkt ist für den rechten Arm vorzugsweise das rechte Schultergelenk, für den linken Arm das linke Schultergelenk und für das rechte Bein das rechte Hüftgelenk und für das linke Bein das linke Hüftgelenk. Die Referenzpunkte können aber auch jeweils anders gewählt werden.

In einer Weiterbildung der Erfindung werden die Extremitätensensorgruppen in einer dritten Stufe zusammengefasst, vorzugsweise werden alle Extremitätensensorgruppen zusammengefasst und aus den Extremitätensensorgruppendaten werden Gestendaten der Person berechnet und die Gestendaten in MIDI-Daten dritter Stufe umgewandelt und die MIDI-Daten erster Stufe und zweiter Stufe und dritter Stufe werden an eine Ton- und/oder Lichterzeugungseinheit weitergeleitet. Die Extremitätensensorgruppendaten werden zu Gestendaten aggregiert.

Bei den Extremitätensensorgruppendaten handelt es sich um Daten, die die Bewegung, vorzugsweise die Stellung, Ausdehnung, Geschwindigkeit, Winkelstellung und Positionierung einer einzelnen Extremität darstellen.

Vorzugsweise werden der Person insgesamt die Gestendaten zugeordnet, die dann in MIDI-Daten dritter Stufe umgewandelt werden und der Ton- und/oder Lichterzeugungseinheit zugeleitet werden. Die Gestendaten stellen beispielsweise die Gesamtstellung, Gesamtausdehnung, Gesamtgeschwindigkeit, Gesamtpositionierung der Person dar. Es kann sich bei einer Geste aber auch um Stellung, Ausdehnung, Geschwindigkeit Positionierung von teilen der Person, z.B. einer Extremität handeln.

Durch die mehrstufige Datenverarbeitung ist es möglich, die Tanzbewegung der Person nicht nur durch die Bewegungssensoren exakt zu erfassen, sondern auch aus den erfassten Bewegungsdaten über MIDI-Daten auf drei Stufen eine differenzierte Ton- und/oder Lichterchoreographie zu erzeugen.

In Weiterbildungen der Erfindung können zur Bestimmung der Gestendaten vorab Torsolängen gemessen und in Torsolängendaten umgewandelt werden. Aus den Extremitätensensorgruppendaten und den Torsolängendaten werden die Gestendaten berechnet. Unter Torsolängen sind insbesondere die Abstände zwischen den beiden Schultergelenken, die Abstände zwischen den beiden Hüftgelenken und Abstände zwischen den Hüft- und Schultergelenken gemeint. Es können auch noch weitere Längen umfasst sein.

Die Bestimmung der Torsolängen gestattet es, die in der zweiten Stufe berechnete Stellung der Extremitäten in den richtigen Abständen einander zuzuordnen und somit die Gesamtstellung, Gesamtausdehnung, Gesamtgeschwindigkeit, Gesamtpositionierung und Gesamtwinkelstellung der Person, also die Geste der Person, noch besser zu beschreiben.

In einer bevorzugten Ausführungsform der Erfindung sind an jedem Arm und an jedem Bein der Person jeweils drei Bewegungssensoren angeordnet. Besonders bevorzugt ist jeweils ein Bewegungssensor am rechten, bzw. linken Oberarm, am rechten bzw. linken Unterarm, an der rechten und linken Handfläche, am rechten und linken Oberschenkel, am rechten und linken Unterschenkel sowie an den rechten und rechten Fußoberseite angeordnet. Bewegungssensoren können aber auch an einzelnen Fingern, einem Oberkörper, dem Kopf angeordnet sein. Somit kann günstigerweise die Bewegung jedes einzelbeweglichen Abschnittes jeder Extremität erfasst werden.

Vorzugsweise handelt es sich bei den Bewegungssensoren um Beschleunigungs- und/oder Rotationsgeschwindigkeitssensoren, die Beschleunigungs- und/oder Rotationsgeschwindigkeitsdaten messen und dem erfindungsgemäßen Verfahren zuführen. Die Bewegungssensoren sind vorteilhafterweise im Handel erhältlich und daher kostengünstig.

In einer bevorzugten Ausführungsform der Erfindung werden die Bewegungssensordaten einer zentralen Sende- und Empfangseinheit, die am Körper der Person angeordnet wird, vorzugsweise zeitlich getaktet zugeführt, die Bewegungssensordaten dort zu Datenframes zusammengefasst und einem Computer zugeführt, der die Bewegungssensordaten der Datenframes in MIDI-Daten erster, zweiter und dritter Stufe umrechnet. Günstigerweise erfolgt die Übermittlung der Bewegungssensordaten von den Bewegungssensoren an die zentrale Sende- und Empfangseinheit über eine Bluetooth-Verbindung, während die Übermittlung der Datenframes von der zentralen Sende- und Empfangseinheit an den Computer über eine WLAN-Verbindung erfolgt. Dabei handelt es sich vorteilhafterweise um übliche und bewehrte digitale Datenübertragungsverbindungen. Grundsätzlich sind auch andere Datenübertragungsverbindungen denkbar.

Es ist in einer bevorzugten Weiterbildung der Erfindung vorgesehen, die Bewegungssensoren von Zeit zu Zeit zu kalibrieren. Dazu nimmt die Person mit den an ihr positionierten Bewegungssensoren eine vorgegebene Stellung ein, beispielsweise ist die Person auf das Publikum ausgerichtet mit vorgegebener Arm- und Beinstellung. Die Person führt dann in der Stellung eine Trigger-Geste aus, beispielsweise ein doppeltes Tippen von Daumen und Mittelfinger. Die Trigger-Geste wird erkannt und löst die Kalibrierung aus und die Bewegungssensoren werden kalibriert. Die bis dahin berechnete Bewegung wird mit der Stellung vorzugsweise verglichen und entsprechend geändert.

Im zweiten Aspekt wird die Aufgabe durch eine Vorrichtung mit den Merkmalen des Anspruchs 10 gelöst.

Die Vorrichtung eignet sich zur Durchführung einer der erfindungsgemäßen Verfahren, während umgekehrt die erfindungsgemäßen Verfahren durch eine der erfindungsgemäßen Vorrichtungen durchführbar sind.

Die Vorrichtung zur Umsetzung von Körperbewegungen einer Person in akustische und/oder optische Signale umfasst eine Mehrzahl an Bewegungssensoren, die an Extremitäten der Person relativ positionsfest anordnungsbar ist und die Bewegungssensoren Bewegungen der Person messen und in Bewegungssensordaten umwandeln. In den Bewegungssensoren ist jeweils vorzugsweise ein AD-Wandler vorgesehen, der die analogen elektrischen Messsignale in die digitalen Bewegungssensordaten umwandelt. Dabei ist der Begriff der Extremität als auch der relativ positionsfesten Anordnung wie beim Verfahren erörtert zu verstehen. Der Begriff der Bewegung ist wie bei dem Verfahren allgemein zu verstehen, als Stellung, Ausdehnung, Geschwindigkeit oder Positionierung.

Die erfindungsgemäße Vorrichtung umfasst einen Computer, dem die Bewegungssensordaten zuführbar sind und der die Bewegungssensordaten in MIDI-Daten erster Stufe umwandelt. Dazu werden die Bewegungssensordaten des einzelnen Sensors jeweils in MIDI-Daten erster Stufe umgewandelt. In der ersten Stufe werden die Bewegungdaten auch als weitergeleitete Bewegungsdaten an die zweite Stufe weitergeleitet. Hinsichtlich der weitergeleiteten Bewegungssensordaten gilt auch das zum Verfahren Gesagte entsprechend.

Ein Programm des Computers fasst die einzelnen Extremitäten der Person zugeordneten Bewegungssensoren jeweils als Extremitätensensorgruppe zusammen und aus den Bewegungssensordaten der Extremitätensensorgruppe berechnet der Computer die Bewegungssensordaten der Extremität und wandelt die Bewegungssensordaten der Extremität in Extremitätensensorgruppendaten um und wandelt die Extremitätensensorgruppendaten in MIDI-Daten zweiter Stufe um.

Es ist erfindungsgemäß eine Ton- und Lichterzeugungseinheit vorgesehen, an die die MIDI-Daten erster Stufe und zweiter Stufe weiterleitbar sind und die vorzugsweise eine Ton- und/oder Lichtabfolge, Show oder Komposition erzeugt. Die Ton- und Lichtdarstellung ist durch die zweistufige Auswertung der Bewegungssensordaten besonders differenziert. Sie spiegelt die natürliche, intuitive Intention des Tänzers wider, beispielsweise ein sich hebender Arm erzeugt einen hohen Ton, eine Schlagbewegung erzeugt einen perkussiven Sound.

Hinsichtlich der Vorrichtung gilt sinngemäß das zum Verfahren Gesagte entsprechend.

In einer Weiterbildung der Erfindung ist das Programm des Computers so ausgelegt, dass die Extremitätensensorgruppen als Geste zusammenfassbar sind und aus den Extremitätensensorgruppendaten Gestendaten der Person berechenbar sind und die Gestendaten in MIDI-Daten dritter Stufe umwandelbar sind. An die Ton- und Lichterzeugungseinheit sind neben den MIDI-Daten erster und zweiter Stufe auch die MIDI-Daten dritter Stufe weiterleitbar.

In einer bevorzugten Ausführungsform der Vorrichtung ist eine zentrale Sende- und Empfangseinheit, die am Körper der Person anordnungsbar ist, vorgesehen, der die Bewegungssensordaten zeitlich getaktet zuführbar sind, in der die Bewegungssensordaten zu Datenframes zusammenfassbar sind und durch die die Datenframes dem Computer zuführbar sind, der die Bewegungssensordaten der Datenframes in MIDI-Daten erster, zweiter und gegebenenfalls dritter Stufe umrechnet.

Vorzugsweise sind die Bewegungssensoren als Beschleunigungs- und/oder Rotationsgeschwindigkeitssensoren ausgebildet, die kostengünstig erwerbbar sind.

Vorzugsweise sind an jedem Arm und jedem Bein jeweils drei Sensoren anordnungsbar.

Günstigerweise ist ein Kalibrierungsprogramm vorgesehen, mit dem die Bewegungssensoren kalibrierbar sind. Es gilt hier das zum Verfahren gesagt entsprechend.

Die Erfindung wird anhand eines Ausführungsbeispiels in zwei Figuren beschrieben, dabei zeigen:

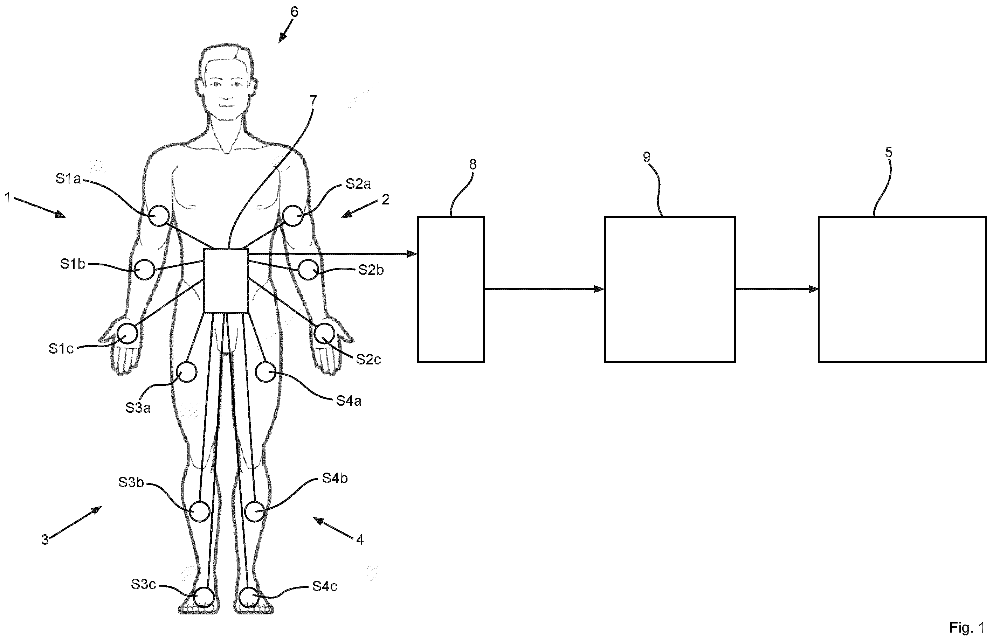

- Fig.1: die schematische Darstellung der Anordnung von zwölf Sensoren an einer Person sowie des Aufbaus der erfindungsgemäßen Vorrichtung zur Umsetzung von Körperbewegungen der Person in akustische und/oder optische Signale,
- Fig. 2: eine Darstellung der Signalsensordatenverarbeitung in einem schematischen Flussdiagramm.

Die erfindungsgemäße Vorrichtung umfasst im Betriebszustand beispielsweise genau zwölf Bewegungssensoren s1a, s1b, s1c, s2a, s2b, s2c, s3a, s3b, s3c, s4a, s4b, s4c, wobei drei Bewegungssensoren am rechten Arm 1 drei Bewegungssensoren am linken Arm 2, drei Bewegungssensoren am rechten Bein 3 und drei Bewegungssensoren am linken Bein 4 jeweils positionsfest gegenüber der Person 6 in dem Bereich, in dem sie vor Beginn der Tanzaufführung an der Person befestigt wurden, angeordnet sind. Es können zusätzlich jeweils ein weiterer Bewegungssensor an der Stirn und am Torso der Person angeordnet sein, auch andere Positionen für weitere Bewegungssensoren sind denkbar.

Die Bewegungssensoren s1a, s1b, s1c, s2a, s2b, s2c, s3a, s3b, s3c, s4a, s4b, s4c sind jeweils mittels eines Gurtes direkt an den jeweiligen Extremitäten 1, 2, 3, 4, also dem rechten Arm, dort am rechten Oberarm, am rechten Unterarm und der rechten Hand, dem linken Arm, dort am linken Oberarm, am linken Unterarm und der linken Hand, dem rechten Bein, dort am rechten Oberschenkel, dem rechten Unterschenkel, dem rechten Fuß, dem linken Bein der Person, dort am linken Oberschenkel, dem linken Unterschenkel und dem linken Fuß befestigbar. Es sind auch andere Befestigungsmöglichkeiten denkbar, wie beispielsweise durch Einnähen in Kleidungsstücke.

Die Vorrichtung umfasst eine zentrale Sende- und Empfangseinheit 7, die vorzugsweise an einem Gürtel von der Person 6 getragen wird.

Die Bewegungssensoren s1a, s1b, s1c, s2a, s2b, s2c, s3a, s3b, s3c, s4a, s4b, s4c messen die Bewegung des jeweiligen Teils der Körperextremität 1, 2, 3, 4 an dem sie angeordnet sind, wandeln Messwerte in elektrische Messwertsignale und diese in digitale Bewegungssensordaten 1a, 1b, 1c, 2a, 2b, 2c, 3a, 3b, 3c, 4a, 4b, 4c um.

Die Bewegungssensordaten 1a, 1b, 1c, 2a, 2b, 2c, 3a, 3b, 3c, 4a, 4b, 4c werden von den Bewegungssensoren s1a, s1b, s1c, s2a, s2b, s2c, s3a, s3b, s3c, s4a, s4b, s4c jeweils über eine Bluetooth-Verbindung an die zentrale Sende- und Empfangseinheit 7 übermittelt. Die Bewegungssensordaten 1a, 1b, 1c, 2a, 2b, 2c, 3a, 3b, 3c, 4a, 4b, 4c werden in der zentralen Sende- und Empfangseinheit 7 zu Datenframes 40 zusammengefasst und per WLAN an einen Computer 8 übermittelt.

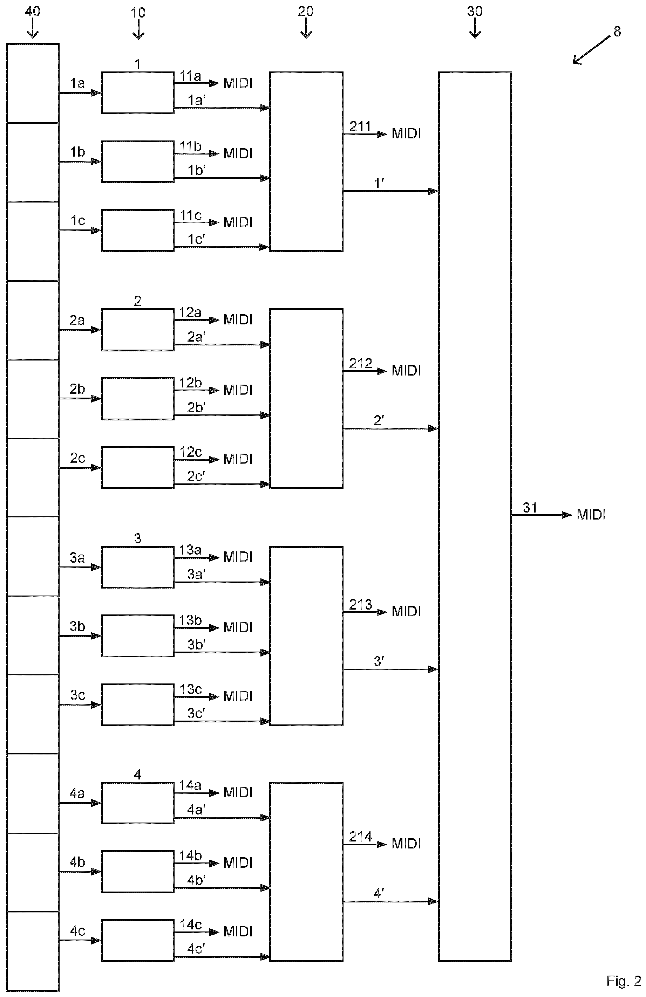

Die Bildung von Datenframes 40 erfolgt in herkömmlicher Weise, indem über die Vorrichtung, insbesondere die Bewegungssensoren s1a, s1b, s1c, s2a, s2b, s2c, s3a, s3b, s3c, s4a, s4b, s4c und die zentrale Sende- und Empfangseinheit 7, eine einheitliche zeitliche Taktung gelegt wird und die Bewegungen durch die Bewegungssensoren s1a, s1b, s1c, s2a, s2b, s2c, s3a, s3b, s3c, s4a, s4b, s4c in vorgegebenen Zeitintervallen gemessen und in jedem Zeitintervall als Bewegungssensordaten 1a, 1b, 1c, 2a, 2b, 2c, 3a, 3b, 3c, 4a, 4b, 4c an die zentrale Sende- und Empfangseinheit 7 gesendet werden. Dort werden die Bewegungssensordaten 1a, 1b, 1c, 2a, 2b, 2c, 3a, 3b, 3c, 4a, 4b, 4c eines Zeitintervalls in dem Datenframe 40 gebündelt und mit einem entsprechenden Header, der auch Informationen über das Zeitintervall und die den Bewegungssensordaten 1a, 1b, 1c, 2a, 2b, 2c, 3a, 3b, 3c, 4a, 4b, 4c des Datenframes 40 zugeordneten Bewegungssensoren 1a, 1b, 1c, 2a, 2b, 2c, 3a, 3b, 3c, 4a, 4b, 4c enthält, an den Computer 8 übermittelt. In Fig. 2 sind die Datenframes 40 nur hinsichtlich ihrer Bewegungssensordaten 1a, 1b, 1c, 2a, 2b, 2c, 3a, 3b, 3c, 4a, 4b, 4c, die Abschnitte des Datenframes 40 bilden, dargestellt.

Bei den Bewegungssensoren s1a, s1b, s1c, s2a, s2b, s2c, s3a, s3b, s3c, s4a, s4b, s4c handelt es sich um Beschleunigungs- und/oder Rotationsgeschwindigkeitssensoren. Jeder der Bewegungssensoren s1a, s1b, s1c, s2a, s2b, s2c, s3a, s3b, s3c, s4a, s4b, s4c kann sowohl Beschleunigungsmessungen als auch Rotationsgeschwindigkeitsmessungen durchführen oder auch nur eine der beiden Messungen durchführen und in entsprechende Bewegungssensordaten 1a, 1b, 1c, 2a, 2b, 2c, 3a, 3b, 3c, 4a, 4b, 4c umwandeln und weiterleiten.

Fig. 2 zeigt eine prinzipielle erfindungsgemäße Verarbeitung der Bewegungssensordaten 1a, 1b, 1c, 2a, 2b, 2c, 3a, 3b, 3c, 4a, 4b, 4c der zwölf Bewegungssensoren s1a, s1b, s1c, s2a, s2b, s2c, s3a, s3b, s3c, s4a, s4b, s4c auf dem Computer 8. Die Bewegungssensordaten 1a, 1b, 1c, 2a, 2b, 2c, 3a, 3b, 3c, 4a, 4b, 4c werden in drei Stufen 10, 20, 30 in MIDI-Daten umgewandelt.

In einer ersten Stufe 10 werden gemäß Fig. 2 links, durch zwölf Pfeile gekennzeichnet, die Bewegungssensordaten 1a, 1b, 1c, 2a, 2b, 2c, 3a, 3b, 3c, 4a, 4b, 4c die in den an den vier Extremitäten 1, 2, 3, 4 angeordneten zwölf Bewegungssensoren s1a, s1b, s1c, s2a, s2b, s2c, s3a, s3b, s3c, s4a, s4b, s4c erzeugt werden, dem Computer 8 als Datenframe 40 zugeführt. Mit den Bewegungssensoren s1a, s1b, s1c, s2a, s2b, s2c,_s3a, s3b, s3c, s4a, s4b, s4c werden Beschleunigungs- und Rotationsgeschwindigkeitsdaten gemessen. An den Computer 8 werden Beschleunigungs- und Rotationsdaten weitergeleitet. Im Computer 8 werden die Datenframes 40 wieder auseinandergenommen und die einzelnen Bewegungssensordaten 1a, 1b, 1c, 2a, 2b, 2c, 3a, 3b, 3c, 4a, 4b, 4c bearbeitet und in drei Stufen 10, 20, 30 in MIDI-Daten 11a, 11b, 11c, 12a, 12b, 12c, 13a, 13b, 13c, 14a, 14b, 14c, 211, 212, 213, 214, 31 umgewandelt.

In der ersten Stufe 10 werden MIDI-Daten erster Stufe 11a, 11b, 11c, 12a, 12b, 12c, 13a, 13b, 13c, 14a, 14b, 14c, und in der zweiten Stufe 20 werden MIDI-Daten zweiter Stufe 211, 212, 213, 214 und in der dritten Stufe 30 werden MIDI-Daten dritter Stufe 31 erzeugt. Die MIDI-Daten erster Stufe 11a, 11b, 11c, 12a, 12b, 12c, 13a, 13b, 13c, 14a, 14b, 14c, die MIDI-Daten zweiter Stufe 211, 212, 213, 214 und die MIDI-Daten dritter Stufe 31 werden jeweils einem Synthesizer 9 zugeführt, der daraus Töne und/oder Lichter erzeugt.

In der ersten Stufe 10 werden die Bewegungssensordaten 1a, 1b, 1c, 2a, 2b, 2c, 3a, 3b, 3c, 4a, 4b, 4c der einzelnen Bewegungssensoren s1a, s1b, s1c, s2a, s2b, s2c, s3a, s3b, s3c, s4a, s4b, s4c in einem Programm in dem Computer 8 ausgewertet und den einzelnen Bewegungssensoren s1a, s1b, s1c, s2a, s2b, s2c, s3a, s3b, s3c, s4a, s4b, s4c direkt zugeordnete MIDI-Daten erster Stufe 11a, 11b, 11c, 12a, 12b, 12c, 13a, 13b, 13c, 14a, 14b, 14c generiert. Günstigerweise werden MIDI-Daten erster Stufe 11a, 11b, 11c, 12a, 12b, 12c, 13a, 13b, 13c, 14a, 14b, 14c für jeden der Bewegungssensoren s1a, s1b, s1c, s2a, s2b, s2c, s3a, s3b, s3c, s4a, s4b, s4c separat generiert. Die MIDI-Daten erster Stufe 11a, 11b, 11c, 12a, 12b, 12c, 13a, 13b, 13c, 14a, 14b, 14c werden gemäß Fig. 2 separat und direkt dem Synthesizer 9 zugeführt. Somit werden in der ersten Stufe 10 der Datenverarbeitung der Bewegung jedes Bewegungssensors s1a, s1b, s1c, s2a, s2b, s2c, s3a, s3b, s3c, s4a, s4b, s4c unmittelbar MIDI-Daten erster Stufe 11a, 11b, 11c, 12a, 12b, 12c, 13a, 13b, 13c, 14a, 14b, 14c, zugeordnet, die dann in Abhängigkeit von einer Komposition als Licht und/oder Ton dargestellt werden. Die eben beschriebene Bearbeitungstiefe der Bewegungsdaten 1a, 1b, 1c, 2a, 2b, 2c, 3a, 3b, 3c, 4a, 4b, 4c ist im Stand der Technik aus der CN 106504732 A in etwa bekannt.

In der ersten Stufe 10 werden die Bewegungssensordaten 1a, 1b, 1c, 2a, 2b, 2c, 3a, 3b, 3c, 4a, 4b, 4c auch weitergeleitet oder geringfügig bearbeitet, z.B. geglättet, normalisiert und in ein für die weitere Verarbeitung zweckmäßiges Datenformat übersetzt, vorzugsweise werden 16 bit- Festkommazahlen in 64bit-Fließkommazahlen gewandelt und als weitergeleitete Bewegungssensordaten 1a', 1b', 1c', 2a', 2b', 2c', 3a', 3b', 3c', 4a', 4b', 4c'weitergeleitet. Die an die zweite Stufe 20 weitergeleiteten Bewegungssensordaten 1a', 1b', 1c', 2a', 2b', 2c', 3a', 3b', 3c', 4a', 4b', 4c'entsprechen jeweils aber im wesentlichen, in einigen Beispielen aber auch exakt, den Bewegungssensordaten 1a, 1b, 1c, 2a, 2b, 2c, 3a, 3b, 3c, 4a, 4b, 4c, vorzugsweise werden die weiteregeleiteten Bewegungssensordaten 1a', 1b', 1c', 2a', 2b', 2c', 3a', 3b', 3c', 4a', 4b', 4c' normalisiert und in ein für die weitere Verarbeitung zweckmäßiges Datenformat übersetzt, vorzugsweise werden 16 bit- Festkommazahlen in 64bit-Fließkommazahlen gewandelt.

Zur Verarbeitung der weitergeleiteten Bewegungssensordaten 1a', 1b', 1c', 2a', 2b', 2c', 3a', 3b', 3c', 4a', 4b', 4c' in der zweiten Stufe 20 werden die Bewegungssensoren s1a, s1b, s1c, s2a, s2b, s2c, s3a, s3b, s3c, s4a, s4b, s4c zu Extremitätensensorgruppen (s1a, s1b, s1c), (s2a, s2b, s2c), (s3a, s3b, s3c), (s4a, s4b, s4c) zusammengefasst, wobei die jeweils drei Bewegungssensoren einer Extremität 1, 2, 3, 4, also des rechten Armes 1, des linken Armes 2, des rechten Beines 3, des linken Beines 4 jeweils einer von vier Extremitätensensorgruppen (s1a, s1b, s1c), (s2a, s2b, s2c), (s3a, s3b, s3c), (s4a, s4b, s4c) zugeordnet werden. Sollten weitere Bewegungssensoren vorhanden sein, können auch weitere Extremitätensensorgruppen gebildet werden, beispielsweise für den Kopf oder den Torso der Person 6.

Die Bewegungssensordaten 1a, 1b, 1c, 2a, 2b, 2c, 3a, 3b, 3c, 4a, 4b, 4c sind vorzugsweise mit einer Kennung des Bewegungssensors s1a, s1b, s1c, s2a, s2b, s2c, s3a, s3b, s3c, s4a, s4b, s4c versehen, derart, dass nach der Übermittlung des Datenframes 40 an den Computer 8 eine Zuordnung der Bewegungssensordaten 1a, 1b, 1c, 2a, 2b, 2c, 3a, 3b, 3c, 4a, 4b, 4c der einzelnen Bewegungssensoren s1a, s1b, s1c, s2a, s2b, s2c, s3a, s3b, s3c, s4a, s4b, s4c zu den Extremitäten 1, 2, 3, 4 möglich ist.

Üblicherweise werden die Extremitäten 1, 2, 3, 4 über Metadaten unterschieden, die Bewegungssensordaten 1a, 1b, 1c, 2a, 2b, 2c, 3a, 3b, 3c, 4a, 4b, 4c einer Extremität 1, 2 3, 4 werden durch ihre Stellung innerhalb des Datensatzes unterscheiden.

Es kann vorgesehen sein, zunächst Körpermaße der Person 6 zu bestimmen, insbesondere die Längen von Ober- und Unterarm beider Arme 1, 2, die Längen von Ober- und Unterschenkel beider Beine 3, 4. Die Körpermaße werden als Parameter in das Programm des Computers 8 eingegeben und dort auch auf der zweiten Stufe 20 mitverarbeitet.

Der Computer 8 berechnet direkt aus den weitergeleiteten Bewegungssensordaten 1a', 1b', 1c', 2a', 2b', 2c', 3a', 3b', 3c', 4a', 4b', 4c' Extremitätensensorgruppendaten 1', 2', 3', 4' der Extremitätensensorgruppe 1, 2, 3, 4. Die Extremitätensensorgruppendaten 1', 2', 3', 4' beschreiben die Haltung, die Ausdehnung, die Geschwindigkeit, Winkelstellung und die Stellung der Extremität 1, 2, 3, 4 bezüglich eines Bezugspunktes, der bei den Armen 1, 2 vorzugsweise das jeweilige Schultergelenk und bei den Beinen 3, 4 das jeweilige Hüftgelenk ist.

Die Extremitätensensorgruppendaten 1', 2', 3', 4' werden dann durch den Computer 8 für jede Extremität 1, 2, 3, 4 in MIDI-Daten zweiter Stufe 211, 212, 213, 214 umgewandelt und dem Synthesizer 9 zugeführt, der entsprechende Töne oder Lichteffekte erzeugt.

In einer dritten Stufe 30 werden die Extremitätensensorgruppendaten 1', 2', 3', 4' zusammengeführt und aus den Extremitätensensorgruppendaten 1', 2', 3', 4' sogenannte Gestendaten ermittelt. Unter Gestendaten wird hier verstanden, dass die Gesamtstellung der Person 6 oder auch Teile der Person durch Gestendaten erfasst wird, also wie sich alle vier Extremitäten 1, 2, 3, 4 zueinander und zum Torso bewegen oder befinden. Bei einer Geste kann es sich auch um Bewegung, Stellung einer einzelnen Extremität handeln. Es werden vorzugsweise weitere Körpermaße wie die Abstände zwischen beiden Schultergelenken und zwischen beiden Hüftgelenken sowie die Abstände zwischen den Hüft- und Schultergelenken ermittelt. Aus den Extremitätensensorgruppendaten 1', 2', 3', 4' und den weiteren Körpermaßen und ggf. auch den weitergeleiteten Bewegungssensordaten 1a', 1b', 1c', 2a', 2b', 2c', 3a', 3b', 3c', 4a', 4b', 4c' werden die Gestendaten ermittelt und in MIDI-Daten dritter Stufe 31 umgewandelt. Die MIDI-Daten dritter Stufe 31 werden ebenfalls dem Synthesizer 9 zugeführt.

Ein weiterer Aspekt der Erfindung umfasst die Kalibrierung der Vorrichtung. Grundsätzlich wird die Stellung eines Bewegungssensors s1a, s1b, s1c, s2a, s2b, s2c, s3a, s3b, s3c, s4a, s4b, s4c durch einen Anfangswert des Bewegungssensors s1a, s1b, s1c, s2a, s2b, s2c, s3a, s3b, s3c, s4a, s4b, s4c bestimmt sowie den Bewegungssensordaten 1a, 1b, 1c, 2a, 2b, 2c, 3a, 3b, 3c, 4a, 4b, 4c, die durch den Bewegungssensor s1a, s1b, s1c, s2a, s2b, s2c, s3a, s3b, s3c, s4a, s4b, s4c ermittelt werden, aus denen dann ausgehend von dem Anfangswert ein Endwert berechnet werden kann. Der Endwert dient als Anfangswert für eine nächste Berechnung. Da die Berechnungsintervalle sich üblicherweise in der digitalen Frequenz der gesamten Vorrichtung, also im Millisekundenbereich, bewegen, werden innerhalb weniger Sekunden tausende von Berechnungen fällig, so dass sich geringfügige Fehler sehr schnell fortpflanzen und aufaddieren. Aus diesem Grunde muss die Stellung jedes Bewegungssensors s1a, s1b, s1c, s2a, s2b, s2c, s3a, s3b, s3c, s4a, s4b, s4c von Zeit zu Zeit, beispielsweise nach einer halben Minute, überprüft werden und kalibriert werden. Das heißt, in bestimmten Zeitintervallen muss die Person 6 eine vorgegebene Trigger-Geste auf der Bühne ausführen z.B. einen doppelten Tipp mit Hilfe des Mittelfingers und Daumens ausführen, die die Kalibrierung triggert. Wenn Trigger-Geste ausgeführt wird, nehmen auch die anderen Sensoren eine bestimmte Stellung ein, beispielsweise ist die Person dem Publikum zugewandt mit gestreckten Beinen und angewinkelten Armen. Diese Stellung wird dann als neuer Ausgangswert für weitere Berechnungen genommen. Die Trigger-Geste wird erkannt und startet die Kalibrierung.

### Bezugszeichenliste

- 1: Rechter Arm
- 1': Extremitätensensorgruppendaten
- s1a: Bewegungssensor
- s1b: Bewegungssensor
- s1c: Bewegungssensor
- 1a: Bewegungssensordaten
- 1a': Bewegungssensordaten
- 1b: Bewegungssensordaten
- 1b': Bewegungssensordaten
- 1c: Bewegungssensordaten
- 1c': Bewegungssensordaten
- 2: Linker Arm
- 2': Extremitätensensorgruppendaten
- s2a: Bewegungssensor
- s2b: Bewegungssensor
- s2c: Bewegungssensor
- 2a: Bewegungssensordaten
- 2a': Bewegungssensordaten
- 2b: Bewegungssensordaten
- 2b': Bewegungssensordaten
- 2c: Bewegungssensordaten
- 2c': Bewegungssensordaten
- 3: Rechtes Bein
- 3': Extremitätensensorgruppendaten
- s3a: Bewegungssensor
- s3b: Bewegungssensor
- s3c: Bewegungssensor
- 3a: Bewegungssensordaten
- 3a': Bewegungssensordaten
- 3b: Bewegungssensordaten
- 3b': Bewegungssensordaten
- 3c: Bewegungssensordaten
- 3c': Bewegungssensordaten
- 4: Linkes Bein
- 4': Extremitätensensorgruppendaten
- s4a: Bewegungssensor
- s4b: Bewegungssensor
- s4c: Bewegungssensor
- 4a: Bewegungssensordaten
- 4a': Bewegungssensordaten
- 4b: Bewegungssensordaten
- 4b': Bewegungssensordaten
- 4c: Bewegungssensordaten
- 4c': Bewegungssensordaten
- 5: Lautsprecheranlage
- 6: Person
- 7: Zentrale Sende- und Empfangseinheit
- 8: Computer
- 9: Synthesizer
- 10: Erste Stufe
- 11a: MIDI-Daten erster Stufe
- 11b: MIDI-Daten erster Stufe
- 11c: MIDI-Daten erster Stufe
- 12a: MIDI-Daten erster Stufe
- 12b: MIDI-Daten erster Stufe
- 12c: MIDI-Daten erster Stufe
- 13a: MIDI-Daten erster Stufe
- 13b: MIDI-Daten erster Stufe
- 13c: MIDI-Daten erster Stufe
- 14a: MIDI-Daten erster Stufe
- 14b: MIDI-Daten erster Stufe
- 14c: MIDI-Daten erster Stufe

- 20: Zweite Stufe
- 211: MIDI-Daten zweiter Stufe
- 212: MIDI-Daten zweiter Stufe
- 213: MIDI-Daten zweiter Stufe
- 214: MIDI-Daten zweiter Stufe

- 30: Dritte Stufe
- 31: MIDI-Daten dritter Stufe
- 40: Datenframe

## Patentansprüche

1. Verfahren zur Wandlung von Köperbewegungen einer Person (6) in akustische
und/oder optische Signale, indem
eine Mehrzahl an Bewegungssensoren (s1a, s1b, ... s4c) an Extremitäten (1, 2, 3, 4) der Person (6) positionsfest in Bezug auf die Extremität angeordnet wird, Bewegungen der Person (6) durch die Bewegungssensoren (s1a, s1b, ... s4c) gemessen werden und in Bewegungssensordaten (1a, 1b, ... 4c) umgewandelt werden und die Bewegungssensordaten (1a, 1b, ... 4c) in MIDI-Daten erster Stufe (11a, 11b, ... 14c) umgewandelt werden und als weitergeleitete Bewegungssensordaten (1a', 1b', ... 4c') weitergeleitet werden, die einzelnen Extremitäten (1, 2, 3, 4) der Person (6) zugeordneten Bewegungssensoren (s1a, s1b, ... s4c) jeweils als Extremitätensensorgruppe ((s1a, s1b, s1c), ... (s4a, s4b, s4c)) zusammengefasst werden und aus weitergeleiteten Bewegungssensordaten (1a', 1b', ... 4c') der Bewegungssensoren (s1a, s1b, ... s4c) der Extremitätensensorgruppe ((1a,1b,2c), ... (4a, 4b 4c)) Bewegungen der Extremität (1, 2, 3 4) berechnet werden und in Extremitätensensorgruppendaten (1', 2', 3', 4') der Extremität (1, 2, 3, 4) umgewandelt werden und die Extremitätensensorgruppendaten (1' ,2' ,3' ,4') in MIDI-Daten zweiter Stufe (211, 212, 213, 214) umgewandelt werden, die MIDI-Daten erster Stufe (11a, 11b, ... 14c) und zweiter Stufe (211, 212, 213, 214) an eine Ton- und/oder Lichterzeugungseinheit (9) weitergeleitet werden.

2. Verfahren nach Anspruch 1,
**dadurch gekennzeichnet, dass** Längendaten der Extremität (1, 2, 3, 4) ermittelt werden und aus den weitergeleiteten Bewegungssensordaten (1a', 1b', ... 4c') der Bewegungssensoren (s1a, s1b, ... s4c) der Extremität (1, 2, 3, 4) und den Längendaten die Extremitätensensorgruppendaten (1', 2', 3', 4') ermittelt werden.

3. Verfahren nach Anspruch 1 oder 2,
**dadurch gekennzeichnet, dass** die den Extremitäten (1, 2, 3, 4) der Person (6) zugordneten Extremitätensensorgruppen ((s1a, s1b, s1c), ... (s4a, s4b, s4c)) zu einer Geste zusammengefasst werden und aus den Extremitätensensorgruppendaten (1', 2', 3', 4') Gestendaten der Person (6) berechnet werden und die Gestendaten in MIDI-Daten dritter Stufe (31) umgewandelt werden,
die MIDI-Daten dritter Stufe (31) an die Ton- und/oder Lichterzeugungseinheit (9) weitergeleitet werden.

4. Verfahren nach Anspruch 1, 2 oder 3,
**dadurch gekennzeichnet, dass** eine Torsolänge der Person (6) gemessen wird und in Torsolängendaten umgewandelt wird und aus den Extremitätengruppendaten (1', 2', 3', 4') und den Torsolängendaten die Gestendaten berechnet werden.

5. Verfahren nach einem der vorstehenden Ansprüche,
**dadurch gekennzeichnet, dass** an jedem Arm (1, 2) und jedem Bein (3, 4) jeweils drei Bewegungssensoren (s1a, s1b, ... s4c) angeordnet werden.

6. Verfahren nach einem der vorstehenden Ansprüche,
**dadurch gekennzeichnet, dass** an beiden Oberarmen, Unterarmen, Handflächen und beiden Oberschenkeln, Unterschenkeln, Fußoberseiten jeweils ein Bewegungssensor (s1a, s1b, ... s4c) angeordnet wird.

7. Verfahren nach einem der vorstehenden Ansprüche,
**dadurch gekennzeichnet, dass** die Bewegungssensordaten (1a, 1b, ... 4c) einer zentralen Sende- und Empfangseinheit (7), die am Körper der Person (6) angeordnet wird, zeitlich getaktet zugeführt werden, die Bewegungssensordaten (1a, 1b, ... 4c) dort zu Datenframes zusammengefasst werden und einem Computer (8) zugeführt werden, der die Daten der Datenframes in MIDI-Daten erster, zweiter und dritter Stufe (11, 21, 31) umrechnet.

8. Verfahren nach einem der vorstehenden Ansprüche,
**dadurch gekennzeichnet, dass** die Bewegungssensoren (s1a, s1b, ... 4c) Beschleunigungs- und/oder Rotationsgeschwindigkeitsdaten erfassen.

9. Verfahren nach einem der vorstehenden Ansprüche,
**dadurch gekennzeichnet, dass** die Person (6) mit den Bewegungssensoren (s1a, s1b, ... s4c) eine Trigger-Geste ausführt und die Bewegungssensoren (s1a, s1b, ... s4c) in dieser Stellung kalibriert werden.

10. Vorrichtung zur Wandlung von Köperbewegungen einer Person (6) in akustische und/oder optische Signal, mit
- einer Mehrzahl an Bewegungssensoren (s1a, s1b, ... s4c), die an Extremitäten (1, 2, 3, 4) der Person (6) relativ positionsfest anordnungsbar sind, und die Bewegungssensoren (s1a, s1b, ... s4c) Bewegungen der Person (6) messen und in Bewegungssensordaten (1a, 1b, ... 4c) umwandeln und
- einem Computer (8), dem die Bewegungssensordaten (1a, 1b, ... 4c) zuführbar sind, der die Bewegungssensordaten (1a, 1b, ... 4c) in MIDI-Daten erster Stufe (11a, 11b, ... 14c) und als weitergeleitete Bewegungssensordaten (1a', 1b', ... 4c') weiterleitet, und
- der Computer (8) die einzelnen Extremitäten (1, 2, 3, 4) der Person (6) zugeordneten Bewegungssensoren (s1a, s1b, ... s4c) jeweils als Extremitätensensorgruppe((s1a, s1b, s1c), ... (s4a, s4b, s4c)) zusammenfasst und aus den weitergeleiteten Bewegungssensordaten ((1a', 1b', ... 4c')) der Extremitätensensorgruppe ((s1a, s1b, s1c), ... (s4a, s4b, s4c)) Bewegungsdaten der Extremität (1, 2, 3, 4) berechnet und in Extremitätensensorgruppendaten (1', 2', 3', 4') umwandelt und die Extremitätensensorgruppendaten (1', 2', 3', 4') in MIDI-Daten zweiter Stufe (211, 212, 213, 214) umwandelt, und
- einer Ton- und/oder Lichterzeugungseinheit (9), an die die MIDI-Daten erster Stufe (11a, 11b, ... 14c) und zweiter Stufe (211, 212, 213, 214) weiterleitbar sind.

11. Vorrichtung nach Anspruch 10,
**dadurch gekennzeichnet, dass** der Computer (8) die Extremitätensensorgruppen (s1a, s1b, ... s4c) als Geste zusammenfasst und aus den Extremitätensensorgruppendaten (1', 2', 3', 4') Gestendaten der Person (6) berechnet und die Gestendaten in MIDI-Daten dritter Stufe (31) umgewandelt, einer Ton- und/oder Lichterzeugungseinheit (9), an die die MIDI-Daten erster Stufe (11a, 11b, ... 14c) und zweiter Stufe (211, 212, 213, 214) und dritter Stufe (31) weiterleitbar sind.

12. Vorrichtung nach Anspruch 10 oder 11,
**gekennzeichnet durch** eine zentrale Sende- Empfangseinheit (7), die am Körper der Person (6) anordnungsbar ist, der die Bewegungssensordaten (1a, 1b, ... 4c) zeitlich getaktet zuführbar sind, die Bewegungssensordaten (1a, 1b, ... 4c) zu Datenframes zusammenfasst und dem Computer (8) zuführt, der die Bewegungssensordaten (1a, 1b, ... 4c) der Datenframes in MIDI-Daten erster, zweiter und dritter Stufe (11a, 11b, ... 14c, 211, 212, 213, 214, 31) umrechnet.

13. Vorrichtung nach Anspruch 11 oder 12,
**dadurch gekennzeichnet, dass** die Bewegungssensoren (s1a, s1b, ... s4c) Beschleunigungs- und/oder Rotationsgeschwindigkeitssensoren umfassen.

14. Vorrichtung nach einem der Ansprüche 11 bis 13,
**dadurch gekennzeichnet, dass** an jedem Arm (1, 2) und jedem Bein (3, 4) jeweils drei Bewegungssensoren (s1a, s1b, ... s4c) anordnungsbar sind.

15. Vorrichtung nach einem der Ansprüche 11 bis 14,
**gekennzeichnet durch** ein Kalibrierungsprogramm, mit dem die Bewegungssensoren (s1a, s1b, ... s4c) durch eine Trigger-Geste, die die Person (6) durchführt, kalibrierbar sind.

## Claims

1. Method for converting body movements of a person (6) into acoustic and/or optical signals, wherein
a plurality of motion sensors (s1a, s1b, ... s4c) are arranged on the limbs (1, 2, 3, 4) of the person (6) in a fixed position relative to the limb,
the movements of the person (6) are measured by the motion sensors (s1a, s1b, ... s4c) and converted into motion sensor data (1a, 1b, ... 4c), and the motion sensor data (1a, 1b, ... 4c) are converted into first-stage MIDI data (11a, 11b, ... 14c) and forwarded as forwarded motion sensor data (1a', 1b', ... 4c') and the motion sensors (s1a, s1b, ... s4c) associated with the individual limbs (1, 2, 3, 4) of the person (6) are each grouped as a limb sensor group ((s1a, s1b, s1c), ... (s4a, s4b, s4c)) and from the forwarded motion sensor data (1a', 1b', ... 4c') of the motion sensors (s1a, s1b, ... s4c) of the limb sensor group ((1a, 1b, 2c), ... (4a, 4b, 4c)) movements of the limb (1, 2, 3, 4) are calculated and converted into limb sensor group data (1', 2', 3', 4') of the limb (1, 2, 3, 4), and the limb sensor group data (1', 2', 3', 4') are converted into second-stage MIDI data (211, 212, 213, 214), the first-stage MIDI data (11a, 11b, ... 14c) and second-stage MIDI data (211, 212, 213, 214) are transmitted to a sound and/or light generation unit (9).

2. The method according to claim 1,
**characterised in that** length data of the limb (1, 2, 3, 4) is determined and, from the forwarded motion sensor data (1a', 1b', ... 4c') of the motion sensors (s1a, s1b, ... s4c) of the limb (1, 2, 3, 4) and the length data, the limb sensor group data (1', 2', 3', 4') is determined.

3. The method according to claim 1 or 2,
**characterised in that** limb sensor groups ((s1a, s1b, s1c), ... (s4a, s4b, s4c)) associated to the limbs (1, 2, 3, 4) of the person (6) are combined into a gesture, and gesture data of the person (6) is calculated from the limb sensor group data (1', 2', 3', 4'), and the gesture data is converted into third-stage MIDI data (31),
the third-level MIDI data (31) is forwarded to the sound and/or light generation unit (9).

4. The method according to claim 1, 2 or 3,
**characterised in that** a torso length of the person (6) is measured and converted into torso length data, and the gesture data is calculated from the limb sensor group data (1', 2', 3', 4') and the torso length data.

5. The method according to any one of the preceding claims,
**characterised in that** three motion sensors (s1a, s1b, ... s4c) are arranged on each arm (1, 2) and each leg (3, 4).

6. The method according to one of the preceding claims,
**characterised in that** one motion sensor (s1a, s1b, ... s4c) is arranged on each of the upper arms, forearms, palms and both thighs, lower legs and tops of the feet.

7. The method according to one of the preceding claims,
**characterised in that** the motion sensor data (1a, 1b, ... 4c) is supplied in a time-synchronised manner to a central transmitting and receiving unit (7) arranged on the body of the person (6), the motion sensor data (1a, 1b, ... 4c) is there combined into data frames and fed to a computer (8), which converts the data of the data frames into first-, second- and third-level MIDI data (11, 21, 31).

8. The method according to any of the preceding claims,
**characterised in that** the motion sensors (s1a, s1b, ... 4c) detect acceleration and/or rotational velocity data.

9. The method according to any of the preceding claims,
**characterised in that** the person (6) performs a trigger gesture using the motion sensors (s1a, s1b, ... s4c) and the motion sensors (s1a, s1b, ... s4c) are calibrated in this position.

10. Device for converting body movements of a person (6) into acoustic and/or optical signals, comprising
- a plurality of motion sensors (s1a, s1b, ... s4c) which can be arranged in a relatively fixed position on the limbs (1, 2, 3, 4) of the person (6), and the motion sensors (s1a, s1b, ... s4c) measure movements of the person (6) and convert them into motion sensor data (1a, 1b, ... 4c), and
- a computer (8) to which the motion sensor data (1a, 1b, ... 4c) can be supplied, which converts the motion sensor data (1a, 1b, ... 4c) into first-stage MIDI data (11a, 11b, ... 14c) and forwards them as forwarded motion sensor data (1a', 1b', ... 4c'), and
- the computer (8) groups the motion sensors (s1a, s1b, ... s4c) assigned to the individual limbs (1, 2, 3, 4) of the person (6) into respective limb sensor groups ((s1a, s1b, s1c), ... (s4a, s4b, s4c)) and, from the forwarded motion sensor data ((1a', 1b', ... 4c')) of the limb sensor group ((s1a, s1b, s1c), ... (s4a, s4b, s4c)) motion data for the limb (1, 2, 3, 4) is calculated and converted into limb sensor group data (1', 2', 3', 4'), and the limb sensor group data (1', 2', 3', 4') is converted into second-stage MIDI data (211, 212, 213, 214), and
- a sound and/or light generation unit (9) to which the first-stage MIDI data (11a, 11b, ... 14c) and second-stage MIDI data (211, 212, 213, 214) can be transmitted.

11. The device according to claim 10,
**characterised in that** the computer (8) combines the limb sensor groups (s1a, s1b, ... s4c) as a gesture and calculates the gesture data of the person (6) from the limb sensor group data (1', 2', 3', 4') and converts the gesture data into third-stage MIDI data (31), which is transmitted to a sound and/or light generation unit (9) to which the first-stage MIDI data (11a, 11b, ... 14c) and second-stage (211, 212, 213, 214) and third-stage (31) MIDI data can be forwarded.

12. The device according to claim 10 or 11,
**characterised by** a central transmitting and receiving unit (7) which can be positioned on the body of the person (6), to which the motion sensor data (1a, 1b, ... 4c) can be supplied in a time-synchronised manner, which combines the motion sensor data (1a, 1b, ... 4c) into data frames and feeds them to the computer (8), which converts the motion sensor data (1a, 1b, ... 4c) of the data frames into first-, second- and third-level MIDI data (11a, 11b, ... 14c, 211, 212, 213, 214, 31).

13. The device according to claim 11 or 12,
**characterised in that** the motion sensors (s1a, s1b, ... s4c) comprise acceleration and/or rotational velocity sensors.

14. The device according to any one of claims 11 to 13,
**characterised in that** three motion sensors (s1a, s1b, ... s4c) can be arranged on each arm (1, 2) and each leg (3, 4).

15. The device according to any one of claims 11 to 14,
**characterised by** a calibration program with which the motion sensors (s1a, s1b, ... s4c) can be calibrated by means of a trigger gesture performed by the person (6).

## Revendications

1. Procédé de conversion de mouvements corporels d'une personne (6) en signaux acoustiques et/ou optiques en ce que
une multitude de capteurs de mouvement (s1a, s1b, ... s4c) sur des extrémités (1, 2, 3, 4) de la personne (6) sont positionnés fixement par rapport à l'extrémité, des mouvements de la personne (6) sont mesurés par les capteurs de mouvement (s1a, s1b, ... s4c) et sont convertis en données de capteur de mouvement (1a, 1b, ... 4c) et les données de capteur de mouvement (1a, 1b, ... 4c) sont converties en données MIDI de premier ordre (11a, 11b, ... 14c) et sont transférées en tant que données de capteurs de mouvement transférées (1a', 1b', ... 4c'), les divers capteurs de mouvement (s1a, s1b, ... s4c) associés à des extrémités (1, 2, 3, 4) de la personne (6) sont regroupés chacun en tant que groupe de capteurs d'extrémité ((s1a, s1b, s1c), ... (s4a, s4b, s4c) et des mouvements de l'extrémité (1, 2, 3, 4) sont calculés à partir de données de capteur de mouvement transférées (1a', 1b', ... 4c') des capteurs de mouvement (s1a, s1b, ... s4c) du groupe de capteurs d'extrémité ((1a, 1b, 2c), ... (4a, 4b, 4c)) et sont convertis en données de groupe de capteurs d'extrémité (1', 2', 3', 4') de l'extrémité (1, 2, 3, 4) et les données de groupe de capteurs d'extrémité (1' ,2' ,3' ,4') sont converties en données MIDI de deuxième ordre (211, 212, 213, 214), les données MIDI de premier ordre (11a, 11b, ... 14c) et de deuxième ordre (211, 212, 213, 214) sont transférées à une unité de génération de sons et/ou de lumière (9).

2. Procédé selon la revendication 1,
**caractérisé en ce que** des données de longueur de l'extrémité (1, 2, 3, 4) sont déterminées et les données de groupe de capteurs d'extrémité (1', 2', 3', 4') sont déterminées à partir des données de capteur de mouvement transférées (1a', 1b', ... 4c') des capteurs de mouvement (s1a, s1b, ... s4c) de l'extrémité (1, 2, 3, 4) et des données de longueur.

3. Procédé selon la revendication 1 ou 2,
**caractérisé en ce que** les groupes de capteurs d'extrémité ((s1a, s1b, s1c), ... (s4a, s4b, s4c)) associés aux extrémités (1, 2, 3, 4) de la personne (6) sont regroupés en un geste et des données de geste de la personne (6) sont calculées à partir des données de groupe de capteurs d'extrémité (1', 2', 3', 4') et les données de geste sont converties en données MIDI de troisième ordre (31),
les données MIDI de troisième ordre (31) sont transférées à l'unité de génération de sons et/ou de lumière (9).

4. Procédé selon la revendication 1, 2 ou 3,
**caractérisé en ce qu'**une longueur de torse de la personne (6) est mesurée et est convertie en données de longueur de torse et les données de geste sont calculées à partir des données de groupe d'extrémité (1', 2', 3', 4') et des données de longueur de torse.

5. Procédé selon l'une des revendications précédentes,
**caractérisé en ce que** sont disposés sur chaque bras (1, 2) et chaque jambe (3, 4) respectivement trois capteurs de mouvement (s1a, s1b, ... s4c).

6. Procédé selon l'une des revendications précédentes,
**caractérisé en ce qu'**est disposé, sur les deux arrière-bras , les avant-bras, les paumes et les deux cuisses, les jambes et les dessus de pied, respectivement un capteur de mouvement (s1a, s1b, ... s4c).

7. Procédé selon l'une des revendications précédentes,
**caractérisé en ce que** les données de capteur de mouvement (1a, 1b, ... 4c) sont amenées de manière cadencée dans le temps à une unité centrale d'envoi et de réception (7), qui est disposée sur le corps de la personne (6), les données de capteur de mouvement (1a, 1b, ... 4c) y sont regroupées en des trames de données et sont amenées à un ordinateur (8), qui convertit les données des trames de données en données MIDI de premier, deuxième et troisième ordre (11, 21, 31).

8. Procédé selon l'une des revendications précédentes,
**caractérisé en ce que** les capteurs de mouvement (s1a, s1b, ... 4c) détectent des données d'accélération et/ou de vitesse de rotation.

9. Procédé selon l'une des revendications précédentes,
**caractérisé en ce que** la personne (6) exécute un geste de déclenchement avec les capteurs de mouvement (s1a, s1b, ... s4c) et les capteurs de mouvement (s1a, s1b, ... s4c) sont calibrés dans ladite position.

10. Dispositif destiné à convertir des mouvements corporels d'une personne (6) en un signal acoustique et/ou optique, avec
- une multitude de capteurs de mouvement (s1a, s1b, ... s4c), qui peuvent être positionnés relativement fixement sur des extrémités (1, 2, 3, 4) de la personne (6), et les capteurs de mouvement (s1a, s1b, ... s4c) mesurant des mouvements de la personne (6) et les convertissant en des données de capteur de mouvement (1a, 1b, ... 4c) et
- un ordinateur (8), auquel peuvent être amenées les données de capteur de mouvement (1a, 1b, ... 4c), qui transfère les données de capteur de mouvement (1a, 1b, ... 4c) en données MIDI de premier ordre (11a, 11b, ... 14c) et en tant que données de capteur de mouvement transférées (1a', 1b', ... 4c'), et
- l'ordinateur (8) regroupant les divers capteurs de mouvement (s1a, s1b, ... s4c) associés à des extrémités (1, 2, 3, 4) de la personne (6) respectivement en tant que groupe de capteurs d'extrémité ((s1a, s1b, s1c), ... (s4a, s4b, s4c)) et calculant à partir des données de capteur de mouvement transférées ((1a', 1b', ... 4c')) du groupe de capteurs d'extrémité ((s1a, s1b, s1c), ... (s4a, s4b, s4c)) des données de mouvement de l'extrémité (1, 2, 3, 4) et les convertissant en données de groupe de capteurs d'extrémité (1', 2', 3', 4') et convertissant les données de groupe de capteurs d'extrémité (1', 2', 3', 4') en données MIDI de deuxième ordre (211, 212, 213, 214), et
- une unité de génération de sons et/ou de lumière (9), à laquelle les données MIDI de premier ordre (11a, 11b, ... 14c) et de deuxième ordre (211, 212, 213, 214) peuvent être transmises.

11. Dispositif selon la revendication 10,
**caractérisé en ce que** l'ordinateur (8) regroupe les groupes de capteurs d'extrémité (s1a, s1b, ... s4c) sous la forme d'un geste et calcule à partir des données de groupes de capteurs d'extrémité (1', 2', 3', 4') des données de geste de la personne (6) et convertit les données de geste en données MIDI de troisième ordre (31), les données MIDI de premier ordre (11a, 11b, ... 14c) et de deuxième ordre (211, 212, 213, 214) et de troisième ordre (31) pouvant être transférées à une unité de génération de sons et/ou de lumière (9).

12. Dispositif selon la revendication 10 ou 11,
**caractérisé par** une unité centrale d'envoi et de réception (7), qui peut être disposée sur le corps de la personne (6), à laquelle les données de capteur de mouvement (1a, 1b, ... 4c) peuvent être amenées de manière cadencée dans le temps, qui regroupe des données de capteur de mouvement (1a, 1b, ... 4c) en des trames de données et les amène à l'ordinateur (8), qui convertit les données de capteur de mouvement (1a, 1b, ... 4c) des trames de données en données MIDI de premier, deuxième et troisième ordre (11a, 11b, ... 14c, 211, 212, 213, 214, 31).

13. Dispositif selon la revendication 11 ou 12,
**caractérisé en ce que** les capteurs de mouvement (s1a, s1b, ... s4c) comprennent des capteurs d'accélération et/ou de vitesse de rotation.

14. Dispositif selon l'une des revendications 11 à 13,
**caractérisé en ce que** peuvent être disposés sur chaque bras (1, 2) et chaque jambe (3, 4) respectivement trois capteurs de mouvement (s1a, s1b, ... s4c).

15. Dispositif selon l'une des revendications 11 à 14,
**caractérisé par** un programme de calibrage, avec lequel les capteurs de mouvement (s1a, s1b, ... s4c) peuvent être calibrés par un geste de déclenchement exécuté par la personne (6).
